# EUROPÄISCHE PATENTSCHRIFT

(11) **EP 1 431 528 B1**
(45) Veröffentlichungstag und Bekanntmachung des Hinweises auf die Patenterteilung: **25.07.2007**
(21) Anmeldenummer: 03028979.7
(22) Anmeldetag: 17.12.2003
(51) Int. Cl.: F01N 3/021, F01N 3/022, F01N 3/023, F01N 3/031, F01N 3/035, F01N 3/28, B01J 35/04, B01D 39/20

(54) **Abgasreinigungsanordnung**
Exhaust purification device
Dispositif de purification des gaz d'échappement

(30) Priorität: 17.12.2002 DE 10259034
(43) Veröffentlichungstag der Anmeldung: 23.06.2004
(73) Patentinhaber: J. Eberspächer GmbH & Co. KG, 73730 Esslingen (DE)
(72) Erfinder: Gaiser, Gerd, Dr., 72768 Reutlingen (DE); Zacke, Peter, Dr., 73095 Albershausen (DE)
(74) Vertreter: Schorr, Frank Jürgen

(56) Entgegenhaltungen:
- EP-A- 0 577 117
- WO-A-00/53904
- WO-A-02/29218
- DE-A1- 3 923 094
- DE-A1- 4 206 812
- DE-A1- 19 704 147
- DE-C1- 10 020 170
- US-A- 4 652 286

## Beschreibung

Die vorliegende Erfindung betrifft eine Abgasreinigungsanordnung zur Reinigung eines Abgases einer Verbrennungskraftmaschine.

Es ist allgemein bekannt, daß mit fossilen Brennstoffen betriebene Brennkraftmaschinen Schadstoffe emittieren. Zu diesen Schadstoffen zählen insbesondere sogenannte Feststoffpartikel, wie z. B. Rußpartikel oder kurz Ruß genannt. Wie auch bekannt ist, werden diese Rußpartikel insbesondere von mit Dieselkraftstoff betriebenen Brennkraftmaschinen ausgestoßen, wie sie überwiegend in Nutzfahrzeugen und zunehmend auch Pkw zu finden sind.

Diese Rußteilchen erreichen eine Größe von einigen 10 nm bis zu einigen Mikrometern. Teilchen dieser Größenordnung schweben über längere Zeit in der Luft und sind deshalb für den Menschen schädlich, da sie beim Einatmen in die Tiefe der Lunge eindringen, dort sehr lange verweilen, und sehr schlecht vom Organismus abgebaut werden können. Zudem transportieren die Rußpartikel an ihnen adsorbierte toxische Substanzen wie z.B. krebserregende polyzyklischaromatische Kohlenwasserstoffe in den menschlichen Organismus.

Zur Reduzierung dieser Feststoffpartikel werden nun sogenannte Partikelfilter verwendet, welche im Abgasstrang einer Brennkraftmaschine angeordnet sind.

Allen mit fossilen Brennstoffen betriebenen Verbrennungskraftmaschinen ist gemeinsam, daß sie im Betrieb Kohlenmonoxid CO, Kohlenwasserstoffe HC und Stickoxide NOₓ emittieren.

Im Vergleich zum Dieselmotorabgas ist jedoch z.B. beim Abgas eines Ottomotors der Partikelausstoß ein geringeres Problem. Dafür ist jedoch der Ausstoß an Kohlenmonoxid CO und Kohlenwasserstoffen HC erhöht. Auch diese Schadstoffe sind gesundheitsschädlich und müssen gemäß strenger Abgasnormen auf ein Minimum reduziert werden, was in der Regel durch eine Umwandlung mittels katalytischer Substanzen erfolgt.

Zur Umwandlung dieser Schadstoffe werden Katalysatoranordnungen oder kurz Katalysatoren verwendet, welche die katalytische Substanz in einer Weise umfassen, daß das Abgas bei Durchströmen des Katalysators mit der katalytischen Substanz in Kontakt kommt, wobei der Katalysator ebenfalls im Abgasstrang der Brennkraftmaschine angeordnet ist.

Mit der vorliegenden Erfindung können sowohl Partikel (z.B. aus Dieselmotorabgasen) als auch Schadstoffe wie Kohlenmonoxid CO, Kohlenwasserstoffe HC und Stickoxide NOₓ aus Abgasen von Verbrennungskraftmaschinen reduziert werden.

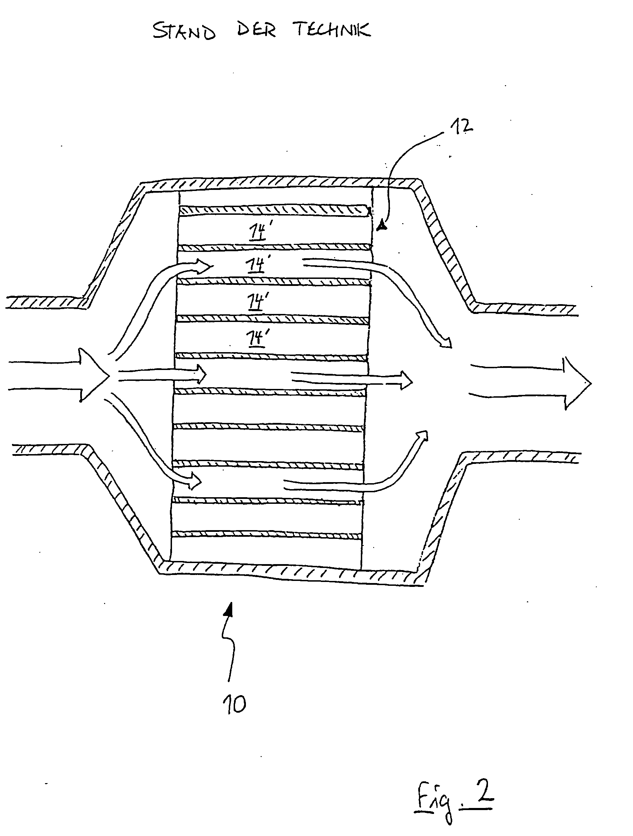

Ein herkömmlicher Partikelfilter ist in Figur 2 dargestellt. Der Partikelfilter 11 ist in einem metallenen Gehäuse 9 angeordnet und umfaßt filternde Wände 15 aus einem porösen Filtermaterial, meist Keramik. Wie in Figur 2 durch Pfeile dargestellt, strömt das Abgas von links nach rechts durch den Filter.

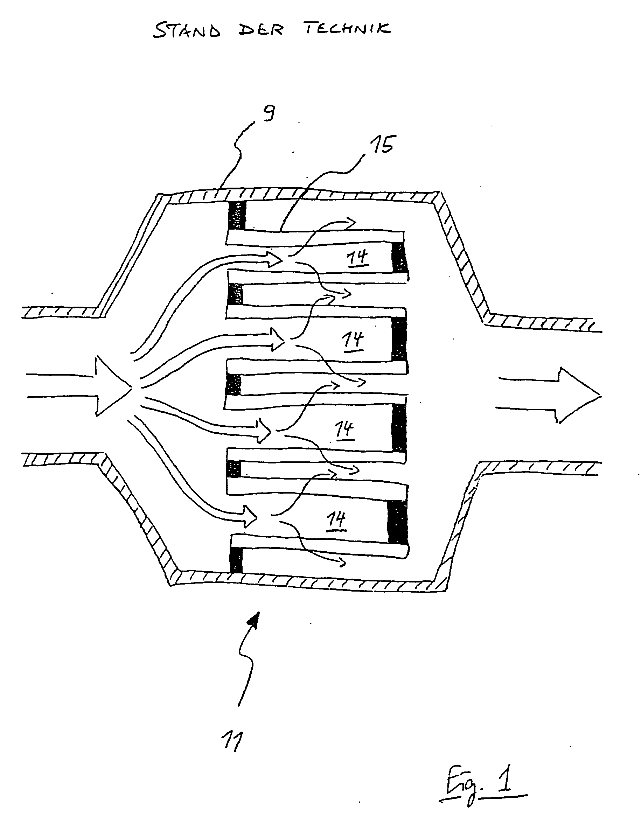

Der in Figur 1 dargestellte Partikelfilter ist als sogenannter Monolith-Filter ausgebildet, d.h. als (Keramik-) Block mit vielen (in der Zeichnung von links nach rechts verlaufenden) Strömungskanälen 14.

Eine Abscheidung von Partikeln kann zum einen auf den Filterwänden 15 erfolgen. Zum anderen gelangen Partikel auch in die Filterwände 15 hinein, wo sie dann als Partikel 21 steckenbleiben.

Ein Nachteil herkömmlicher Partikelfilter bei Kraftfahrzeugen ist jedoch, daß es bei ständiger niedriger Last, wie zum Beispiel im Stadtverkehr, ohne zwischenzeitliche höhere Auslastung des Motors zu einer erhöhten Ruß-Beladung kommen kann. Diese erhöhte Rußbeladung führt allmählich auf den Filterwänden 15 zu einer immer dickeren Rußschicht. Im Extremfall kann es nun zu einer vollständigen Verblockung des Filters kommen, da die Rußschicht schneller anwächst als die Parikel oxidiert werden können. Dadurch steigt der Druckverlust, d.h. die Druckdifferenz zwischen Abgasseite und Ausstoßseite bezogen auf die Filterwand 15, stark an, womit sich der Wirkungsgrad des Motors verschlechtert und im schlimmsten Fall der Motor ausgeht und das Fahrzeug stehenbleibt.

Eine Möglichkeit, diese Verblockung des Partikelfilters aufzulösen bzw. von vornherein zu vermeiden, besteht darin, den Partikelfilter einer Regeneration zu unterziehen.

Dazu können die Filterwände 15 auf ihrer Oberfläche, d.h. also auch in ihrem Inneren, da es sich um ein poröses Material handelt, in der Regel mit einer katalytischen Substanz beschichtet werden. Die katalytische Substanz besteht z.B. aus ein oder mehreren Edelmetallen, wie Platin oder Palladium.

Die katalytische Substanz sorgt dafür, daß zu NO reduziertes NO₂, welches die Rußpartikel oxidiert, also abbaut, wieder zu NO₂ aufoxidiert wird.

Bei einem weiteren Abgasreinigungsverfahren nach dem Stand der Technik kann eine Verblockung dadurch vermieden werden, daß es bei beladenem Filter einen Strömungsweg gibt, der nicht durch eine Rußschicht hindurch strömen muß. In diesem Fall wird bei einer Überladung des Filters, welche bei einem herkömmlichen Filter bereits zu einer Verblockung führen würde, ein Strömungsweg gewählt, der an der Rußschicht vorbei führt. Dabei erfolgt keine oder zumindest nur noch eine geringe Rußabscheidung. Der laufend entstehende Ruß wird dabei ausgetragen und die Maximalbeladung des Rußfilters wird nicht überschritten. Allerdings ist nicht gewährleistet, daß eine weitere Abscheidung des Rußes erfolgt.

Aus der Patentschrift DE 100 20 170 C1 ist ein solcher Partikelfilter bekannt, welcher nicht auf übliche Weise Rußpartikel durch poröse Wände oder dergleichen sozusagen zwangsweise herauszufiltern versucht. Es wird stattdessen versucht, durch den besonderen Aufbau des Partikelfilters die Wahrscheinlichkeit zur Reaktion von Rußpartikeln mit NO₂ zu erhöhen, indem die Verweilzeit von Rußpartikeln in besonders ausgebildeten Bereichen des Partikelfilters verlängert wird.

Dieser herkömmliche Partikelfilter umfaßt also an sich frei durchgängige Strömungswege, wobei in den Strömungswegen Bereiche bereitgestellt sind, in denen "Mikrowirbel" erzeugt werden. Die Partikel verweilen in diesen Mikrowirbeln eine gewisse Zeit, so daß die Möglichkeit zur Reaktion mit NO₂, welche die Rußpartikel durch Oxidation abbauen, erhöht ist.

Eine weitere Abgasreinigungsanordnung ist in der Druckschrift DE 197 04 147 A1 offenbart. Die darin dargestellte Abgasreinigungsanordnung weist übereinander angeordnete gewellte Filterschichten auf, wobei zwischen zwei direkt benachbarten gewellten Filterschichten jeweils eine ebene gasundurchlässige Schicht derart angeordnet ist, daß das zu reinigende Abgas zu Durchtritten durch die Filterschichten gezwungen wird.

Im Hinblick auf eine Abgasreinigungsanordnung zur Reduzierung von Schadstoffen wie CO, HC und NOₓ ist eine herkömmliche Katalysatoranordnung 10 in Figur 2 dargestellt.

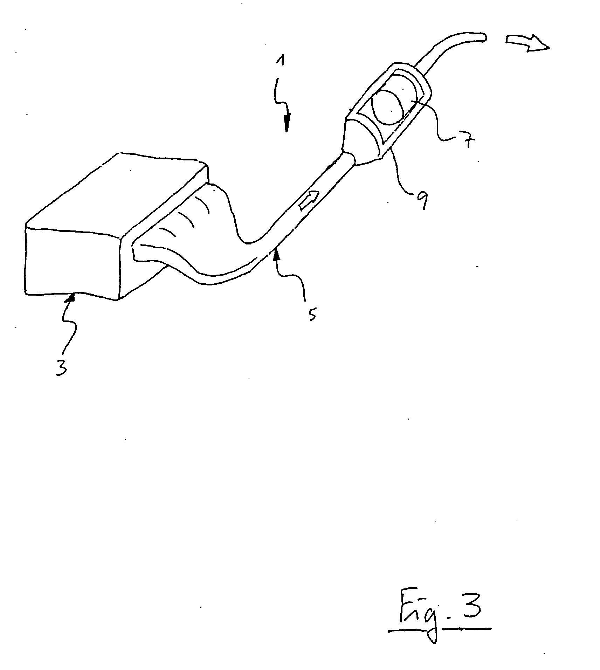

Die Katalysatoranordnung 10 umfasst einen Körper 12 aus Metall oder Keramik, welcher mit einer Vielzahl an geradlinig verlaufenden Strömungskanälen 14' durchsetzt ist, welche von dem zu reinigenden Abgas durchströmt werden (in der Figur 3 von links nach rechts). Dieser Monolith genannte Körper 12 ist vor allem an Innenwänden der Strömungskanäle 14' mit einer katalytischen Substanz beschichtet, welche die im Abgas befindlichen Schadstoffe in ungefährliche Stoffe umwandelt. Damit diese Umwandlungen stattfinden können, muß der Katalysator 10 eine hohe Betriebstemperatur von z.B. wenigstens 200°C aufweisen.

Ein Nachteil herkömmlicher Katalysatoren ist nun, daß diese Betriebstemperatur beim Start eines kalten Motors, d.h. auch kaltem Katalysator, nicht schnell genug erreicht wird, so daß Schadstoffe ungereinigt in die Umwelt gelangen.

Das heißt, je schneller der Katalysator seine Betriebstemperatur erreicht, desto effektiver ist die Schadstoffumwandlung.

Eine Verwendung einer Abgasreinigungsanordnung als Partikelfilter läßt sich nicht klar von einer Verwendung einer Abgasreinigungsanordnung als Katalysator trennen. Ein katalytisch beschichteter Partikelfilter ist in der Lage, die Schadstoffe CO, HC und NOₓ katalytisch umzuwandeln.

WO 00/53904 A1 offenbart eine Abgasreinigungsanordnung gemäß dem Oberbegriff des beiliegenden Anspruchs 1.

Es ist eine Aufgabe der vorliegenden Erfindung, eine alternative Abgasreinigungsanordnung vorzuschlagen, welche gute Eigenschaften als Partikelfilter und insbesondere für die Rußabscheidung aufweist.

Diese Aufgabe wird gelöst durch die Bereitstellung einer Abgasreinigungsanordnung mit den in dem beiliegenden Anspruch 1 wiedergegebenen Merkmalen.

Eine Abgasreinigungsanordnung gemäß einer Ausführungsform der vorliegenden Erfindung ist aus einer Vielzahl von Materialschichten bzw. filternden Wänden aus einem porösen Werkstoff aufgebaut, wobei die filternden Wände derart angeordnet sind, daß sich frei durchgängige Strömungskanäle ergeben, in denen das Abgas zu mehreren Richtungsänderungen gezwungen wird, während es die filternden Wände überströmt.

Eine Partikelabscheidung erfolgt zum einen durch das Überströmen des Abgases der filternden Wände. Zum anderen kann das Abgas durch die porösen filternden Wände hindurchströmen und so gefiltert werden. Das Hindurchströmen erfolgt aufgrund von Druckunterschieden zwischen dem Abgas zugewandten Oberflächen der Materialschichten (sogenannte Luvseiten) und dem Abgas abgewandten Oberflächen der Materialschichten (sogenannte Leeseiten).

Aufgrund der besonderen Anordnung der filternden Wände findet das Durchströmen der filternden Wände mehrfach statt, wodurch die Abgasreinigungswirkung erhöht wird.

Somit kann einerseits aufgrund der frei durchgängigen Strömungskanäle eine komplette Verblockung im wesentlichen ausgeschlossen werden, andererseits findet entweder aufgrund der filternden Wände eine Filterung der Partikel oder, bei sehr hoher Filterbeladung, die Partikelentfernung nach einem Abscheidemechanismus durch Überströmung statt. Jedoch werden in der Regel beide Abscheidemechanismen gleichzeitig ablaufen, d.h. ein Teil des Abgases strömt durch die filternden Wände, und ein anderer Teil folgt dem Verlauf des Strömungskanals.

Somit erfolgt in weiten Betriebsbereichen die Partikelabscheidung nach einem filternden Mechanismus und in Betriebsbereichen, in denen eine filternde Abscheidung nicht mehr möglich ist, das heißt wo herkömmliche Filter versagen würden, erfolgt die Partikelabscheidung nach einem Abscheidemechanismus an den überströmten Oberflächen. Dadurch wird also auch in Zuständen extremer Filterbeladung die Durchströmbarkeit des Filters sichergestellt und gleichzeitig noch eine Partikelabscheidung bewirkt.

Durch die Art der verwendeten Anordnung kann dabei zum einen bei geringen Rußbeladungen die Durchströmung der filternden Wände sichergestellt werden, und zum anderen kann bei hohen Rußbeladungen das Abgas einem Strömungskanal folgen, welcher nicht durch filternde Wände hindurch führt.

Diese gegenläufigen Anforderungen lassen sich nur mit der besonderen erfindungsgemäßen Anordnung der verwendeten Strukturen lösen.

Im Hinblick auf eine Verwendung der Abgasreinigungsanordnung als Katalysator hat die besondere Anordnung der Materialschichten, d.h. aufgrund des mehrfachen Durchströmens der Materialschichten, folgende Vorteile: die Betriebstemperatur wird schneller erreicht, eine Reaktionsgeschwindigkeit der Schadstoffe mit der katalytischen Substanz wird erhöht, was wiederum einen höheren Umsatz umgewandelter Schadstoffe bereits bei niedrigeren Temperaturen zur Folge hat, und es läßt sich eine kompaktere Bauform erzielen.

Vorzugsweise ist eine Vielzahl von aus dem porösen Werkstoff gefertigten Materialschichten mit jeweils zwei Schichtoberflächen, welche eine Vielzahl von nebeneinander angeordneten konkaven und konvexen Oberflächenbereichen aufweisen, derart übereinander angeordnet, daß zwischen aufeinander zuweisenden Bereichen der Schichtoberflächen die Strömungskanäle für das zu reinigende Abgas gebildet werden.

Dabei wird bevorzugt, daß die Strömungskanäle für das zu reinigende Abgas frei durchgängig sind, womit eine Verblockung der Abgasreinigungsanordnung vermieden wird.

Es wird weiterhin bevorzugt, daß konkave Oberflächenbereiche einer ersten der Schichten jeweils konvexen Oberflächenbereiche einer der ersten Schicht unmittelbar benachbarten zweiten Schicht gegenüberliegend, sozusagen "ineinanderpassend", angeordnet sind. Somit läßt sich durch Verändern eines mittleren Abstands zwischen zwei Schichten sich eine Höhe eines jeden Strömungskanals an bestimmte Abgassituationen anpassen.

Der mittlere Abstand zwischen zwei Schichten beträgt weniger als eine Auslenkung der konkaven bzw. konvexen Oberflächenbereiche aus deren Schichtebenen, d.h. der Ebenen, welche durch Anordnungsrichtungen der konvexen und konkaven Oberflächenbereiche aufgespannt werden, wobei eine Auslenkung der Hälfte einer Gesamtausdehnung einer Materialschichtebene, und zwar quer dazu, entspricht.

Auslenkungen der konkaven bzw. konvexen Oberflächenbereiche aus deren Schichtebenen sind größer als 1 mm und kleiner als 7 mm, insbesondere aber kleiner als 5 mm und weiter bevorzugt kleiner als 3 mm.

Ein mittlerer Abstand zwischen einer ersten und einer zweiten Materialschicht 23 weist einen Wert in einem Bereich von 0,5 mm bis 5,0 mm auf, insbesondere aber in einem Bereich von 1,0 mm bis 3,0 mm.

Die Materialschichten 23 weisen eine Dicke auf, welche größer als 0,1 mm, insbesondere aber größer als 0,3 mm, und kleiner als 2,0 mm, insbesondere aber kleiner als 1,2 mm ist.

Insbesondere sind die konkaven und konvexen Oberflächenbereiche in einer Schichtrichtung abwechselnd nebeneinander angeordnet.

In einer weiteren Ausführungsform werden durch die konkaven und konvexen Oberflächenbereiche zusammenhängende Wellenberge und Wellentäler gebildet. Dabei erstrecken sich die Wellenberge und -täler in einer Schichtebene im wesentlichen geradlinig, können aber auch gekrümmt sein.

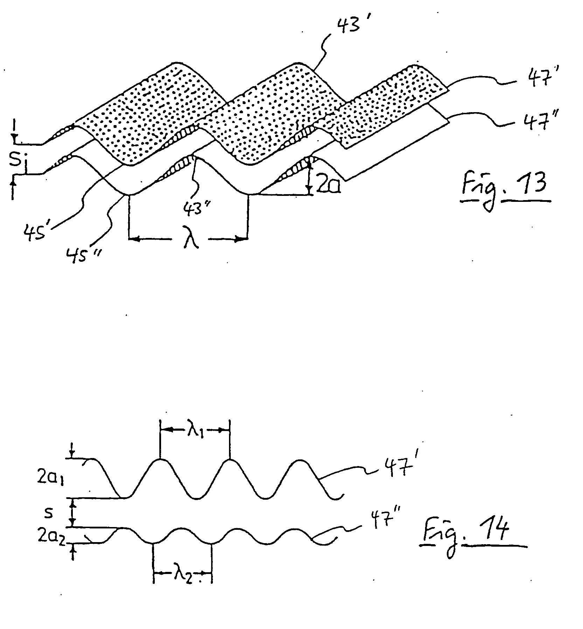

Materialschichten 23 werden mit einem Verhältnis λ/a beschrieben, wobei λ eine Wellenlänge ist, d.h. ein Abstand zweier Wellenberge voneinander in einer Schichtebenenrichtung, und a eine Amplitude, d.h. eine halbe Höhe einer Materialschicht 23 (siehe Figur 13), und wobei λ/a in einem Bereich 2 < λ/a < 10 liegt, und insbesondere in einem Bereich 3 < λ/a < 7.

Weiterhin ist vorgesehen, daß die Erstreckungsrichtungen der Wellenberge und Wellentäler einer ersten Schicht unter einem Winkel zu Erstreckungsrichtungen der Wellenberge und Wellentäler einer der ersten Schicht unmittelbar benachbarten zweiten Schicht orientiert sind. An den jeweiligen Wänden der Wellenberge und Wellentäler erfährt die Strömung eine Umlenkung, welche ihr einen charakteristischen "korkenzieherartigen" Verlauf aufprägt. Dabei wird offensichtlich, daß die Strömung an einer Luvseite jedes Wellenberges oder Wellentales eine Umlenkung mit einer starken Richtungsänderung erfährt. Die Partikelabscheidung ist dabei um so effektiver, je stärker und ausgeprägter die Richtungsänderung der Strömung erfolgt.

Durch Wahl von bestimmten Geometrieparametern läßt sich die Abgasströmung gezielt beeinflussen, um die Partikelabscheidung an die Partikelkonzentration im Abgas anzupassen.

Unter Geometrieparametern werden z.B. die Wellenlänge der Wellenberge bzw. -täler, die Höhe bzw. Tiefe der Wellenberge bzw. -täler (Lagenhöhe) und ein Winkel (Anströmwinkel), unter welchem sich die Wellenberge und -täler zu einer Strömungsverbindungslinie zwischen einem Eintritts- und Austrittsquerschnitt des Partikelfilters erstrecken, verstanden. Dabei liegt der Anströmwinkel in seiner Anwendung als Partikelfilter in einem Bereich von 10° bis 50°, und in seiner Anwendung als Katalysator in einem Bereich von 10° bis 70°.

In einer bevorzugten Ausführungsform werden Abschnitte von filternden Wänden nacheinander (in Abgasströmungsrichtung gesehen) angeordnet, wobei die Abschnitte jeweils unterschiedliche Lagenhöhen aufweisen. Denkbar ist eine Anordnung, bei welcher zunächst ein erster Abschnitt mit großer Lagenhöhe angeordnet wird, dahinter ein zweiter Abschnitt mit kleinerer Lagenhöhe als der ersten, und dahinter ein dritter Abschnitt mit noch kleinerer Lagenhöhe als in dem zweiten Abschnitt.

Bei dieser Anordnung ergeben sich die folgenden Vorteile:

Es läßt sich eine "gestufte" Abscheidung der Partikel erreichen. Die Strukturen mit großer Lagenhöhe führen zu einer geringeren Filterfläche und zu einer geringeren Umlenkung bei der Durchströmung. Dadurch ergibt sich eine.geringere Partikelabscheidung bei großer Lagenhöhe, und umgekehrt eine bessere Partikelabscheidung bei kleiner Lagenhöhe.

So läßt sich bei der gestuften Anordnung im ersten Abschnitt eine geringere Partikelabscheidung und im zweiten Abschnitt eine bessere Partikelabscheidung erreichen, womit sich die Partikelabscheidung an die Partikelkonzentration im Abgas anpassen läßt. Zunächst kann im vorderen Abschnitt mit hoher Partikelfracht die Abscheidung eines Teils der Partikel erreicht werden. Damit kann vermieden werden, daß die gesamte Partikelfracht im vorderen Abschnitt abgeschieden wird. Folglich läßt sich so eine Verblockung wirkungsvoll vermeiden.

Die Materialschichten sind zum Erzielen eines filternden Abscheidemechanismus' aus einem porösen Werkstoff gebildet.

Der poröse Werkstoff ist aus einem Schaum, wie z.B. einem Keramikschaum, gefertigt.

Zur Erzielung einer besonders effektiven Abgasreinigung ist der poröse Werkstoff mit einem Katalysatormaterial beschichtet. Dieses Katalysatormaterial kann ein oder mehrere Edelmetalle, Oxide unedler Metalle oder/und Mischoxide, als Kombination mehrerer Oxide, oder Kombinationen dieser drei Stoffgruppen umfassen.

Eine weitere Erhöhung der Effizienz des Partikelfilters läßt sich in einer weiteren Ausführungsform dadurch erzielen, daß zwischen den Materialschichten jeweils zusätzliche durchströmbare Strukturen angeordnet werden, welche auch eine katalytische Beschichtung tragen.

Diese zusätzliche durchströmbare Struktur ist eine mit Durchtrittsöffnungen versehene Zwischenschicht, welche z.B. als ein Gitter, Netz oder/und Lochplatte ausgebildet ist, wobei aufeinander zuweisende Oberflächenbereiche der Materialschichten an dieser Zwischenschicht anliegen und in einer bevorzugten Ausführungsform mit dieser fest verbunden sind.

Eine Dicke der Zwischenschicht liegt in einem Bereich von 0,01 mm bis 1,0 mm und insbesondere in einem Bereich von 0,02 mm bis 0,8 mm. Die Durchtrittsöffnungen in der Zwischenschicht weisen eine lichte Weite von mehr als 0,3 mm und insbesondere von mehr als 0,5 mm auf.

Die Wirkweise dieser Zwischenschicht ist derart, daß bei jedem Durchtritt des Abgases durch diese Zwischenschicht eine zusätzliche Neubildung von NO2 stattfindet, welches zusätzlich zur Oxidation von Rußpartikeln auf den Materialschichten beiträgt.

Wenn also bei extremer Rußbeladung die Oberflächen der Materialschichten mit einer zu dicken Rußschicht bedeckt sind, so daß das Abgas nur unzureichend mit der katalytischen Substanz in Kontakt kommen kann, sorgt die Zwischenschicht trotzdem für eine ausreichende NO₂-Neubildung. Somit ist die Funktion des Partikelfilters in jedem Lastzustand aufrechterhalten.

Die katalytisch beschichteten Zwischenschichten können entweder als alleiniger Katalysatorträger eingesetzt werden, oder sie können in Kombination mit einer katalytischen Beschichtung der Materialschichten verwendet werden, wobei aber die Kombination von Zwischenschichten und porösen Materialschichten besonders vorteilhaft ist.

Nachfolgend werden Ausführungsformen der Erfindung anhand von Zeichnungen näher erläutert. Hierbei zeigt bzw. zeigen:
- Figur 1: einen herkömmlichen Partikelfilter;
- Figur 2: einen herkömmlichen Katalysator;
- Figur 3: eine schematische Darstellung einer ersten Ausführungsform einer Abgasreinigungsanordnung im Abgasstrang eines Kraftfahrzeugs;
- Figur 4: die Abgasreinigungsanordnung bei Einbau in einen Abgasstrang;
- Figur 5: eine perspektivische Teilansicht der Abgasreinigungsanordnung gemäß Figur 3;
- Figur 6: ein Strömungsdiagramm zur Erläuterung der Funktionsweise der Struktur gemäß Figur 5;
- Figur 7: eine Detailansicht der Figur 6;
- Figur 8: eine perspektivische Teilansicht einer zweiten Ausführungsform der Abgasreinigungsanordnung;
- Figur 9: eine schematische Draufsicht auf eine Struktur der Abgasreinigungsanordnung gemäß Figur 8;
- Figur 10: eine perspektivische Teilansicht der zweiten Ausführungsform gemäß Figur 8 bei Durchströmung mit einem Abgas;
- Figuren 11 bis 17: schematische Darstellungen weiterer bevorzugter Ausführungsformen der Abgasreinigungsanordnung;
- Figur 18: eine weitere Ausführungsform der Abgasreinigungsanordnung mit einer Zwischenschicht;
- Figur 19: eine perspektivische Ansicht der Ausführungsform gemäß Figur 18 bei Durchströmung mit einem Abgas, und
- Figuren 20 und 21: verschiedene Herstellungsarten der Abgasreinigungsanordnung.

In Figur 3 ist eine Abgasreinigungsanordnung 1 schematisch dargestellt. Diese dient zur Behandlung von Abgasen einer symbolisch dargestellten Verbrennungskraftmaschine 3, wobei das von der Verbrennungskraftmaschine 3 produzierte Abgas über einen Abgasstrang 5 zur Behandlung einem Partikelfilter 7, welcher in einem von dem Abgas durchströmten Gehäuse 9 angeordnet ist, zugeführt wird. Für die in dieser Erfindung behandelten Partikelfilter sind insbesondere mit Dieselkraftstoff betriebene Verbrennungskraftmaschinen von Interesse.

In Strömungsrichtung des Abgases gesehen kann vor dem Partikelfilter 7 auch ein Katalysator (hier nicht dargestellt), vorzugsweise ein Oxidationskatalysator, in demselben Gehäuse 9 zur Vorbehandlung des Abgases angeordnet sein. Durch den Katalysator werden bei Temperaturen oberhalb von 200 °C die Kohlenwasserstoffe sowie Kohlenmonoxid mit hohem Wirkungsgrad oxidiert. Abgaspartikel werden durch den Partikelfilter 7 nahezu vollständig zurückgehalten.

Dieser oben beschriebene Oxidationskatalysator für Dieselmotoren ist entsprechend der Abgasreinigungsanordnung ausgebildet, wobei dann Oxidationskatalysator und Partikelfilter als zwei separate Einheiten z.B. in dem vom Abgas durchströmten Gehäuse 9 in Figur 1 angeordnet sind.

Im Gegensatz zur Verwendung als Partikelfilter und/oder Diesel-Oxidationskatalysator kann die Abgasreinigungsanordnung auch als Katalysator für die Schadstoffumwandlung in Abgasen aus Ottomotoren verwendet werden. Die Funktion der Abgasreinigungsanordnung ist dabei, die Schadstoffe HC, CO und NOₓ unter Verwendung von katalytischen Substanzen in die unschädlichen Stoffe H₂O, CO₂ und N₂ umzuwandeln.

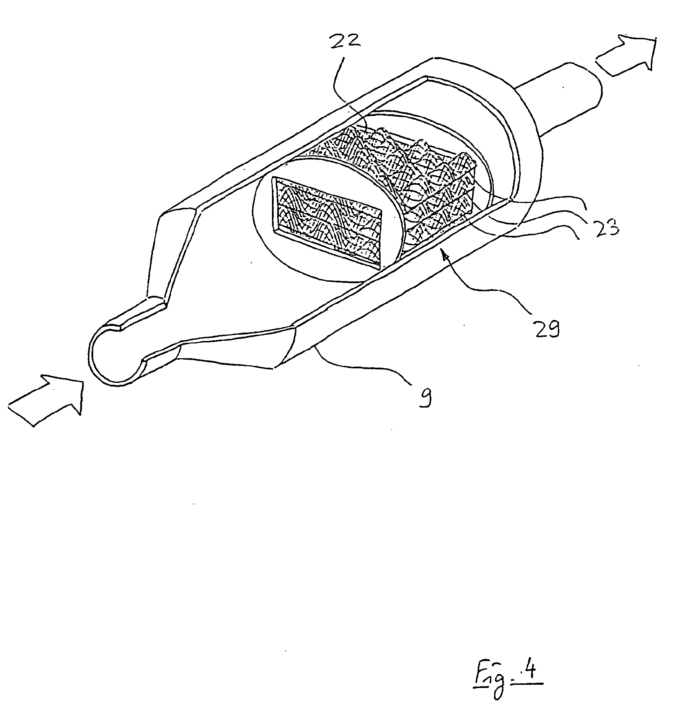

Figur 4 zeigt eine Detailansicht des Abgasstrangs gemäß Figur 3, d.h. die Anordnung des Partikelfilters 29 in dem Metallgehäuse 9. Dabei sind mehrere Materialschichten 23 aus einem porösen Werkstoff zu einem Schichtblock 22 übereinander angeordnet.

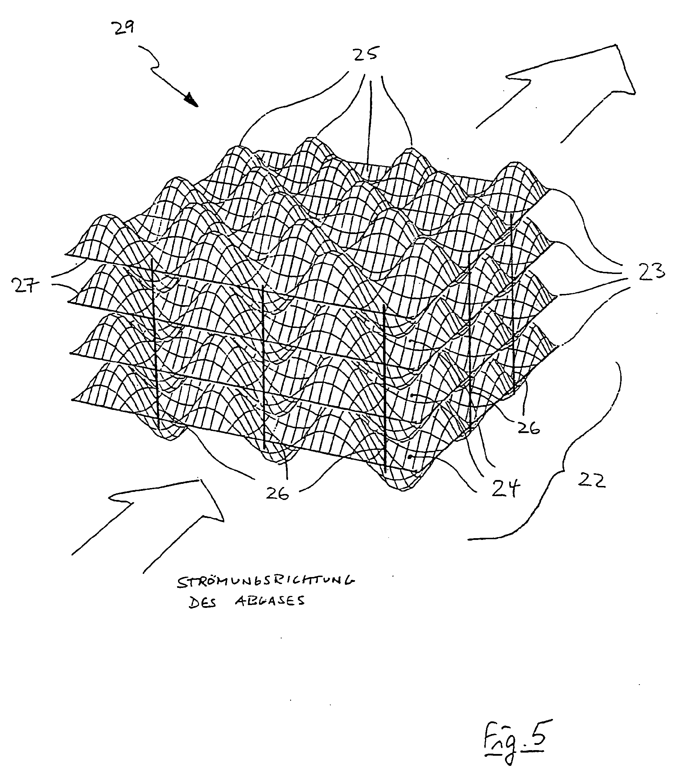

Figur 5 zeigt eine Detailansicht des Partikelfilters 29 aus Figur 4. Jede Materialschicht 23 weist nebeneinander angeordnete konkave und konvexe Oberflächenbereiche 25 auf, welche in zwei quer zueinander orthogonal orientierten Schichtrichtungen periodisch angeordnet sind.

Die Materialschichten 23 sind durch Abstandshalter 26 jeweils miteinander verbunden, um so einen gleichmäßigen Abstand unmittelbar benachbarter Materialschichten 23 voneinander zu erzielen und dem Partikelfilter 29 Stabilität zu geben.

Die Materialschichten 23 mit ihren konvexen und konkaven Oberflächenbereichen 25 sind derart übereinander angeordnet, daß sich zwischen Schichtoberflächen 27 der Materialschichten 23 frei durchgängige Strömungskanäle 24 für das zu reinigende Abgas bilden, welches in der Figur von unten links in den Partikelfilter 29 einströmt.

Aufeinander zuweisende konvexe Oberflächenbereiche 25 unmittelbar benachbarter Materialschichten 23 weisen überall einen gleichen Abstand voneinander auf.

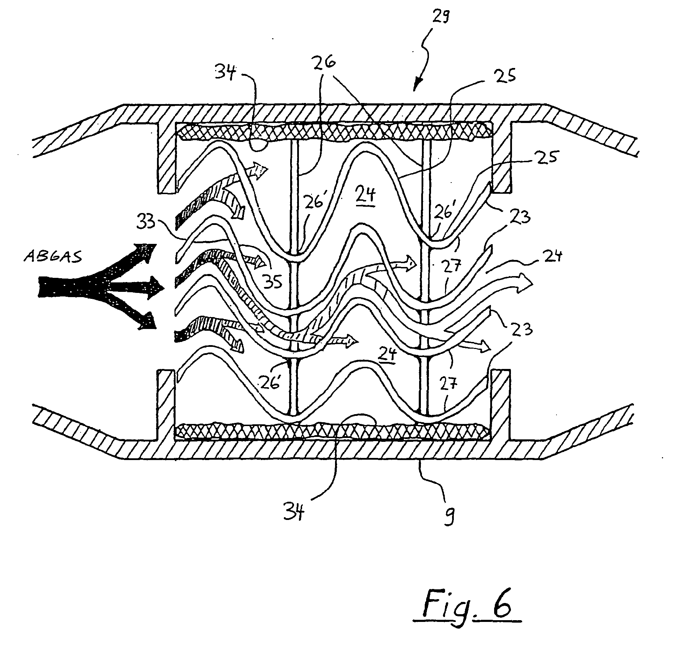

Figur 6 zeigt einen Längsschnitt (in Abgasströmungsrichtung) des Partikelfilters 29 im eingebauten Zustand in dem Gehäuse 9 gemäß Figur 4.

Dabei ist zu erkennen, wie die porösen Materialschichten 23 mit ihren konvexen und konkaven Oberflächenbereichen 25 aufgrund ihrer Anordnung übereinander Strömungskanäle 24 für das zu reinigende Abgas bilden.

Zwischen unmittelbar benachbarten Materialschichten 23 sind quer zu den Schichtebenen sich erstreckende Stangen 26 als Abstandshalter angeordnet, welche an Stellen 26' mit den Materialschichten 23 verbunden sind, und welche der Materialschichtanordnung Stabilität geben. Die Stangen 26 werden von dem Abgas umströmt.

Drahtgestrick 34, welches im Inneren des Gehäuses 9 angeordnet ist, sorgt dafür, daß die Materialschichtanordnung vibrationsgedämpft an dem Gehäuse 9 abgestützt ist.

Aus der Figur 6 ist ersichtlich, daß es aufgrund der konvexen und konkaven Oberflächenbereiche 25 der Materialschichten 23 zu Richtungsänderungen der Abgasströmung kommt. Eine Abscheidung von Partikeln kommt zustande, wenn das Abgas gegen die Oberflächen 27 der Materialschichten 23 "prallt".

Die Partikelabscheidung ist dabei in gewissen Bereichen umso effektiver, je stärker und ausgeprägter die Richtungsänderung der Strömung erfolgt.

Zur Erzielung eines filternden Abscheidemechanismus' sind die Materialschichten 23 aus einem porösen Werkstoff gebildet, nämlich in der Ausführungsform der Figur 6 als ein Vlies. Es ist jedoch auch möglich Gewebe, Geflechte oder dergleichen als porösen Werkstoff einzusetzen. Der poröse Werkstoff ist aus Metallfasern, welche auch gesintert sein können, hergestellt, wobei aber auch Keramikfasern denkbar sind. Andere bevorzugte poröse Werkstoffe sind Pulvermaterialien oder/und Schäume, wie z.B. Keramikschäume.

Dies hat folgende Auswirkungen auf die Durchströmung:

Bei der in Figur 6 gezeigten Strömungsform führt der Strömungswiderstand durch die starke Umlenkung der Strömung zu einem Druckgefälle zwischen einer Luvseite 33 und einer Leeseite 35 der konvexen bzw. konkaven Oberflächenbereiche 25. Das heißt, die Luvseite 33 ist die von dem Abgas angeströmte Seite der Materialschicht 23, und die Leeseite 35 ist die strömungsabgewandte Seite der gleichen Materialschicht 23 an der gleichen Stelle, allerdings in einem benachbarten Strömungskanal 24. Geht man von einer homogenen Durchströmung benachbarter Strömungskanäle 24 aus, was in der Regel vorliegt, so herrscht zwischen der Luvseite 33 und der Leeseite 35 in einem gleichen Abschnitt der Materialschicht 23 eine Druckdifferenz vor. Da die Materialschicht 23 aus einem porösen, d.h. durchströmbaren Werkstoff gebildet ist, führt die beschriebene Druckdifferenz zu einer Durchströmung der Materialschicht. Somit wird eine Filterung des Abgases erzielt. Das heißt, Partikel im Abgasstrom werden auf zweierlei Weise zurückgehalten: zum einen durch Überströmen der Oberflächen 27 der Materialschichten 23 bei Richtungsänderungen des Abgasstromes aufgrund der konvexen bzw. konkaven Oberflächenbereiche 25, und zum anderen durch Hindurchströmen des Abgasstromes durch die porösen Materialschichten 23 aufgrund des Druckgefälles zwischen der Luvseite 33 und der Leeseite 35 an dem gleichen Abschnitt einer Materialschicht 23.

Ist nun die Beladung des Partikelfilters 29 mit Rußpartikeln hoch, ohne daß die Rußpartikel wie oben erwähnt durch NO₂ oder O₂ verbrannt werden können, das heißt der Partikelfilter 29 wird nicht regeneriert, so wird durch die zunehmende Rußbeladung der filternden Materialschichten 23 der Druckverlust bei der Durchströmung zunehmen. Bei einer sehr hohen Beladung wird sich eine Rußschicht von großer Dicke auf den filternden Materialschichten ablagern, was, wie oben gezeigt, bei einem herkömmlichen Partikelfilter zu einer kompletten Verblockung führen kann.

Bei einer solch hohen Beladung der filternden Materialschichten 23 können zwar im Extremfall aufgrund des sehr hohen Druckverlusts die Materialschichten auch kaum oder selbst gar nicht mehr durchströmt werden, jedoch kann das Abgas einem Strömungskanal 24 folgen, so daß es nicht zu einer Verblockung kommen kann, und selbst bei der Überströmung der Materialschichten noch eine Abscheidung der Partikel erfolgen kann, so daß der Motor nicht "abstirbt".

Um eine kontinuierliche Regeneration des Partikelfilters zu erzielen, das heißt, um bereits an oder in den porösen Materialschichten 23 abgeschiedene Rußpartikel zu beseitigen, umfaßt in einer weiteren Ausführungsform der Erfindung der poröse Werkstoff der Materialschichten 23 ein Katalysatormaterial auf äußeren und inneren Oberflächen des porösen Werkstoffs, und zwar in dieser Ausführungsform ein Edelmetall. Es sind aber auch Cer als ein Sauerstoffspeichermaterial, Metalloxide, Mischoxide, oder Kombinationen dieser Stoffgruppen mit jeglichen anderen möglichen Katalysatormaterialien denkbar.

Eine Funktion der als Katalysator genutzten Abgasreinigungsanordnung wird anhand der Figur 6 erläutert.

Wie oben bereits erläutert, strömt ein Teil des durch die Abgasreinigungsanordnung (in der Figur 6 von links nach rechts) strömende Gas aufgrund von Druckunterschieden zwischen einer Luvseite 33 und einer Leeseite 35 durch die Materialschicht 23 hindurch. An der Stelle der Durchströmung wird in der Materialschicht 23 aufgrund von chemischen Reaktionen der katalytischen Substanz mit dem Abgas Reaktionswärme freigesetzt. Diese Reaktionswärme wird mit dem Abgasstrom mitgetragen und dient zur weiteren Erwärmung der stromabwärts liegenden Materialschichten 23. Dadurch kann der Katalysator schneller seine optimale Betriebstemperatur erreichen, im Gegensatz zu herkömmlichen Katalysatorstrukturen, in denen das Abgas nicht durch Materialschichten hindurchströmt.

Wird ein Motor in kaltem Zustand gestartet, ist der Schadstoffausstoß in der Regel am höchsten. Durch das schnellere Erreichen seiner Betriebstemperatur kann der Katalysator den Schadstoffausstoß in der Kaltstartphase erheblich reduzieren.

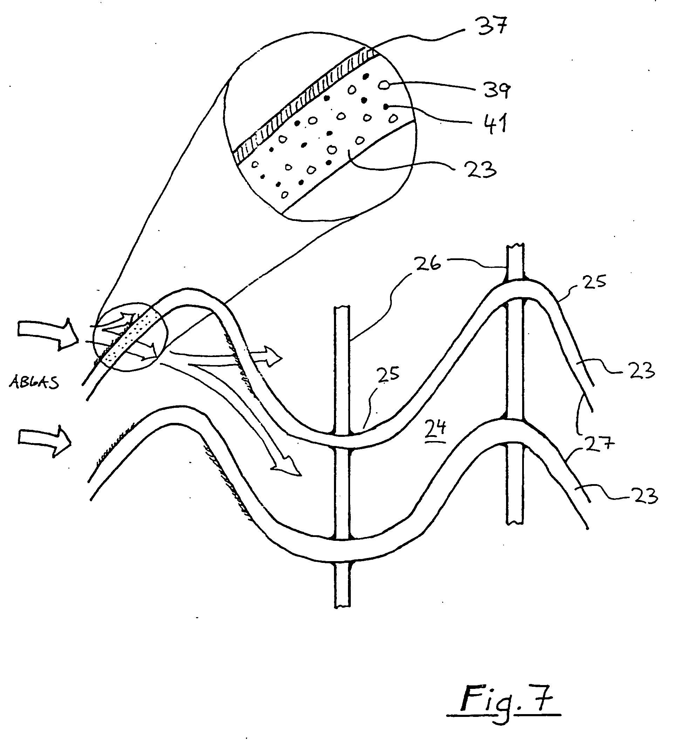

Figur 7 zeigt einen Ausschnitt der Abgasreinigungsanordnung in Figur 6 im Längsschnitt mit einer Detailansicht einer Materialschicht 23.

Dabei wird gezeigt, wie ein Teil des Abgases durch die Materialschicht 23 hindurchtritt und ein anderer Teil die Materialschicht 23 überströmt. Eine Umwandlung von CO, HC und NOₓ in CO₂, H₂O und N₂ findet sowohl beim Überströmen der Materialschicht 23 als auch beim Durchströmen der Materialschicht 23 bei Kontakt mit der katalytischen Substanz statt, welche in der Detailansicht in Figur 7 als aktive Zentren 39 dargestellt ist.

Aufgrund der Porösität des Werkstoffes bilden sich beim Überströmen des Abgases über die Oberflächen der Materialschichten 23 Mikrowirbel. Das hat zur Folge, daß das Abgas längere Zeit an einer Stelle verweilt, und somit eine höhere Wahrscheinlichkeit besteht, daß das Abgas mit aktiven Zentren der katalytischen Beschichtung in Kontakt zu kommen.

Im Falle der Verwendung der Abgasreinigungsanordnung als Partikelfilter erläutert Figur 7 den folgenden Zusammenhang:

Das vom linken Bildrand zuströmende Abgas enthält NO₂, welches z.B. in einem stromaufwärts angeordneten Oxidationskatalysator erzeugt wurde. Dabei kann ein solcher Oxidationskatalysator auch vom Typ der Abgasreinigungsanordnung sein.

Im Falle einer auf der Materialschicht 23 abgelagerten Partikelschicht 37 erfolgt eine Oxidation des dort abgelagerten Rußes mit dem NO₂. Dabei wird das NO₂ zu NO reduziert. An stromabwärts liegenden aktiven Zentren 39 der katalytischen Beschichtung kann das NO wieder zu NO₂ oxidiert werden. Dieses neu gebildete NO₂ kann stromabwärts wieder zur Oxidation von Rußpartikeln 41 dienen. Dieser Vorgang wiederholt sich in der katalytisch beschichteten Materialschicht 23, bis das Abgas auf der Rückseite der Materialschicht wieder ausströmt. In diesem Fall erfolgt jeweils bei einem Kontakt mit einem aktiven Zentrum 39 des Katalysatormaterials die Oxidation von NO zu NO₂, während bei einem Kontakt von NO₂ mit einem Rußpartikel die Oxidation des Rußes und die damit gekoppelte Reduktion des NO₂ zu NO erfolgt. Je häufiger dieser wechselweise Kontakt erfolgt, desto häufiger erfolgt die NO₂-Neubildung, und desto weniger NO wird stromaufwärts benötigt, um das Verfahren der NO₂-Neubildung aufrecht zu halten.

Wenn der letzte Kontakt des Abgases mit einem aktiven Zentrum 41 in der Materialschicht 23 erfolgt, so wird schließlich NO₂ aus der Materialschicht 23 ausströmen. Aufgrund der konvexen bzw. konkaven Oberflächenbereiche 25 der Materialschichten 23 wird das Abgas mit diesem NO₂ stromab wieder in Kontakt mit Rußpartikeln kommen, welche auf den Oberflächen 27 abgeschieden oder in der Materialschicht 23 selber abgelagert wurden. Das heißt, dadurch, daß das Abgas mehrmals durch ein und dieselbe bzw. auch andere benachbarte Materialschichten 23 hindurch treten kann, findet eine wesentlich effektivere NO₂-Neubildung als in einem herkömmlichen Partikelfilter mit katalytischer Beschichtung statt, was zur Folge hat, daß eine Rußbeladung auf ein Minimum gesenkt wird.

Durch die NO₂-Neubildung steht für die Rußoxidation mehr NO₂ zur Verfügung. Die Reaktionsgeschwindigkeit der Rußoxidation hängt neben der Temperatur auch sehr stark von der NO₂-Konzentration ab. Je höher die NO₂-Konzentration, desto höher wird die Reaktionsgeschwindigkeit. Deshalb kann bei hohen NO₂-Konzentrationen bereits bei niedrigeren Temperaturen eine Reaktionsgeschwindigkeit erreicht werden, welche bei geringen NO₂-Konzentrationen erst bei höheren Temperaturen erreicht werden könnte. Somit kann durch die besonders häufige NO₂-Neubildung eine Absenkung der für die Regeneration erforderlichen Temperatur erfolgen. Dies ist von besonderer Bedeutung, da die Abgastemperaturen moderner Dieselmotoren für eine herkömmliche Regeneration oft nicht ausreichen.

Figur 8 zeigt eine weitere Ausführungsform der vorliegenden Erfindung. Dabei bilden die konkaven und konvexen Oberflächenbereiche 25 der Materialschichten 23, wie sie z. B. in Figur 3 dargestellt sind, zusammenhängende Wellenberge 43 und Wellentäler 45. Die Wellenberge 43 und Wellentäler 45 in einer Schichtebene 47 erstrecken sich im wesentlichen geradlinig.

Bezugszeichen 48 stellen Berührpunkte der Materialschichten 23 dar, an denen die Materialschichten 23 durch thermisches Verbacken aneinanderhaften.

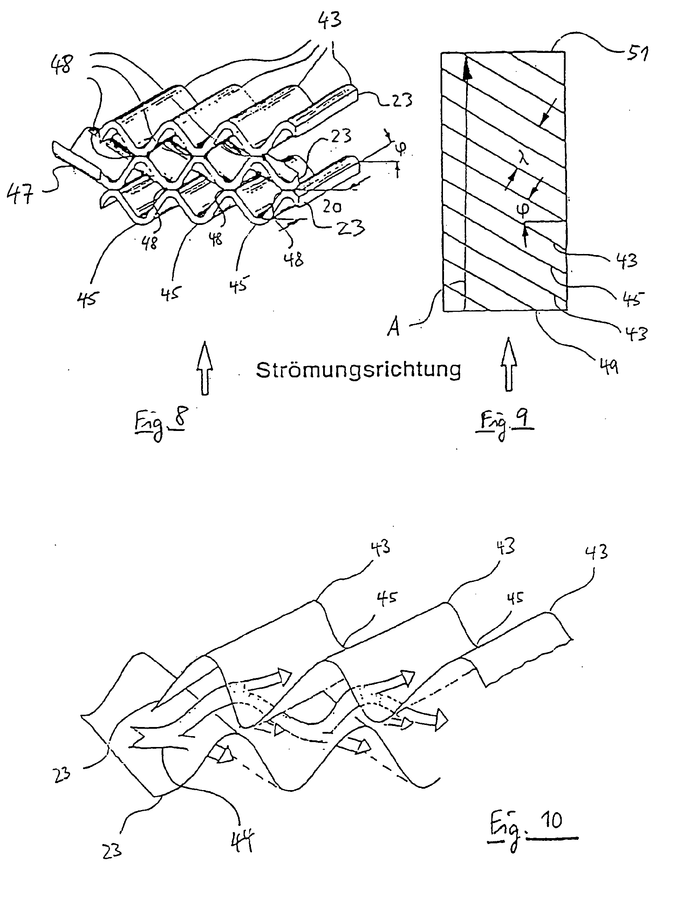

Figur 9 stellt eine Draufsicht auf die in Figur 8 dargestellte Struktur dar. Hierbei sind Wellenberge 43 und Wellentäler 45 als diagonale Linien dargestellt, welche einen Abstand λ (Wellenlänge) von etwa 2 mm in Schichtrichtung aufweisen.

Wie in Figur 9 dargestellt ist, sind die Wellenberge 43 bzw. Wellentäler 45 unter einem Winkel ϕ zu einer Strömungsverbindungslinie A zwischen einem Eintrittsquerschnitt 49 und einem Austrittsquerschnitt 51 angeordnet. Der Winkel ϕ weist hier einen Wert von ca. 40° auf.

Figur 10 zeigt den Verlauf 44 der Abgasströmung wie er sich für eine Ausführungsform nach Figur 8 ergibt. Dabei ist insbesondere zu erkennen, daß das Abgas zum einen zwischen den Materialschichten strömt, wobei das Abgas die Oberflächen der Materialschichten überströmt und dabei Partikel abscheidet, und daß das Abgas zum anderen aufgrund von Druckunterschieden (siehe oben) durch die Materialschichten hindurchströmt und dabei in filternder Weise Partikel zurückgehalten werden.

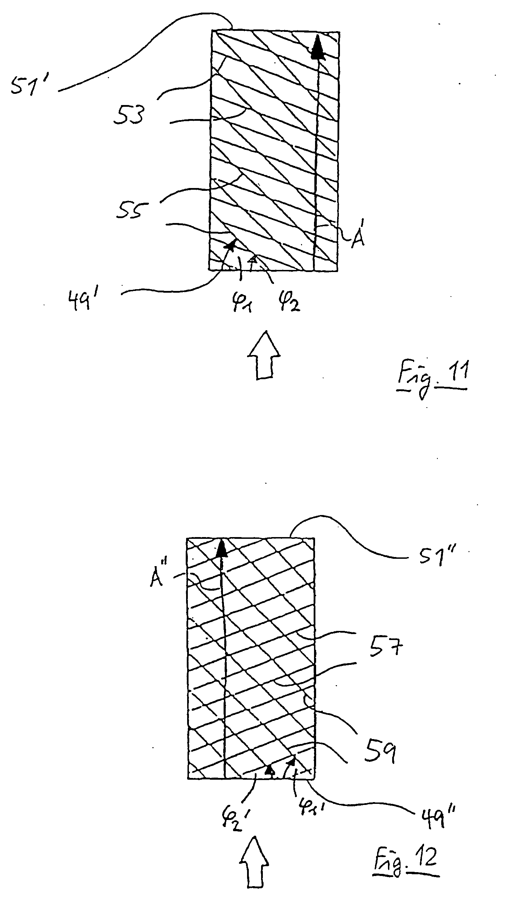

Figuren 11 und 12 zeigen jeweils eine weitere bevorzugte Ausführungsform der Erfindung, wobei der Aufbau ähnlich dem in Figur 9 ist, aber die Anströmwinkel andere sind. Hierbei stellen diagonale Linien 53 und 55 bzw. in Figur 11 diagonale Linien 57 und 59 jeweils Wellenberge von jeweils zwei benachbarten Materialschichten dar. Dabei erstrecken sich die Wellenberge 55 bzw. 59 einer ersten Schicht unter einem (Anström-) Winkel ϕ₁ zu einer Strömungsverbindungslinie A' bzw. A" zwischen einem Eintrittsquerschnitt 49' bzw. 49" und einem Austrittsquerschnitt 51' bzw. 51". Wellenberge einer der ersten Schicht unmittelbar benachbarten zweiten Schicht sind jeweils unter einem Winkel ϕ₂ bzw. ϕ₂' zur Strömungsverbindungslinie A' bzw. A" zwischen Eintrittsquerschnitt 49' und Austrittsquerschnitt 51' bzw. Eintrittsquerschnitt 49" und Austrittsquerschnitt 51" angeordnet.

Durch die Wahl der Anströmwinkel lassen sich eine gewünschte Partikelabscheidung und ein gewünschter Druckverlust an besondere Abgasströmungssituationen anpassen. Insbesondere in Kombination mit den folgenden bevorzugten Ausführungsformen und in Abgasströmungsrichtung hintereinander angeordneten Abschnitten von Partikelfiltern mit jeweils unterschiedlichen Geometrieparametern lassen sich sehr effiziente Anpassungen erzielen (siehe weiter unten).

Figur 13 zeigt eine weitere bevorzugte Ausführungsform, wobei einem Wellental 45' bzw. einem Wellenberg 43' einer ersten Schicht 47' genau jeweils ein Wellental 45" bzw. Wellenberg 43" einer unmittelbar benachbarten zweiten Schicht 47" gegenüber liegt.

Eine weitere bevorzugte Ausführungsform der Erfindung ist in Figur 14 dargestellt.

Bei allen bisherigen Ausführungsformen waren die Materialschichten symmetrisch angeordnet, das heißt Wellenlängen λ und Auslenkungen a waren für jede Materialschicht identisch. Es kann jedoch auch Fälle geben, in denen eine Anordnung von Materialschichten mit asymmetrischen Geometrieparametern sinnvoll ist.

Figur 14 zeigt eine Ausführungsform, in denen die Geometrieparameter einer ersten Schicht 47', Wellenlänge λ₁ und Auslenkung a₁ verschieden von den Geometrieparametern einer unmittelbar benachbarten zweiten Schicht 47'', Wellenlänge λ₂ und Auslenkung a₂, sind.

Solche asymmetrischen Anordnungen bieten folgende Möglichkeiten:
i. Bei asymmetrischen Anordnungen wird sich eine bevorzugte Ausrichtung der Durchströmung ergeben. Beispielsweise kann durch unterschiedliche Anströmwinkel der beiden gegenüberliegenden Materialschichten die Strömung bevorzugt in die Richtung mit dem kleineren Strömungswiderstand gelenkt werden. Dies kann z. B. dazu benutzt werden, um bei einseitiger Anströmung des Partikelfilters die Strömung im Partikelfilter zu verteilen.
ii. Eine asymmetrische Anordnung kann auch dazu genutzt werden, um die Strömung bevorzugt auf eine Seite des Partikelfilters zu lenken, und so die Partilcelabscheidung dort zu beginnen. Wenn sich bei fortgeschrittener Partikelbeladung der Druckverlust in diesem Bereich erhöht, wird sich die Strömung dann zunehmend in die anderen Bereiche verlagern. Auf diese Weise kann die Strömung gezielt von der Beladung abhängig beeinflußt werden.

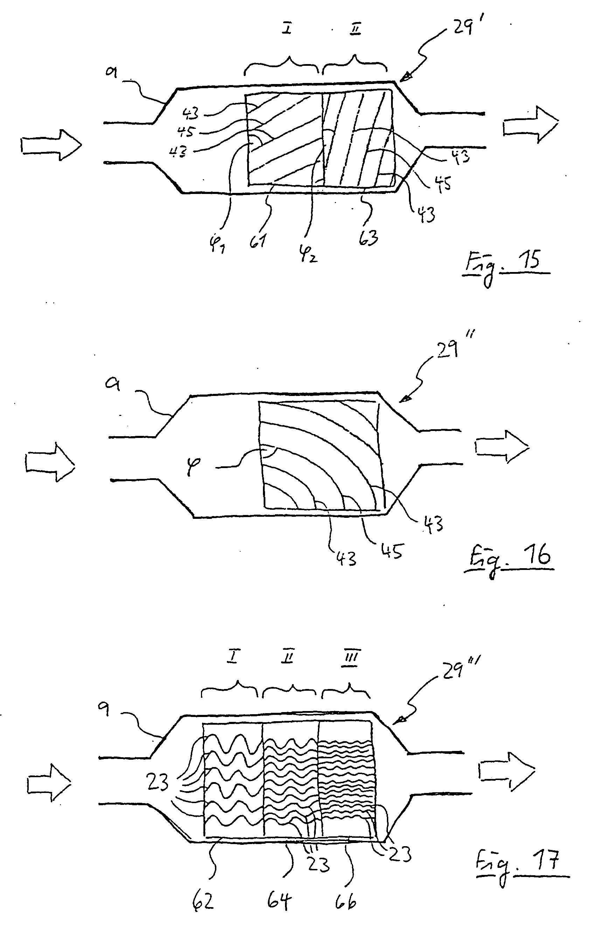

Figuren 15 bis 17 zeigen jeweils eine weitere Ausführungsform der Erfindung.

Figur 15 zeigt einen in einem Gehäuse 9 angeordneten Partikelfilter 29', welcher aus zwei Schichtblöcken 61 und 63 zusammengesetzt ist. Dabei ist der Schichtblock 61 mit seinem Austrittsquerschnitt an den Eintrittsquerschnitt des Schichtblocks 63 aneinandergefügt. Schichtblöcke 61 und 63 bilden Bereiche I und II, in welchen die Anströmwinkel ϕ₁ und ϕ₂ jeweils voneinander verschieden sind. Bezugszeichen 43 und 45 bezeichnen ähnlich Figur 9 Wellenberge und Wellentäler in Draufsicht.

Figur 16 zeigt eine Ausführungsform eines in einem Gehäuse 9 angeordneten Partikelfilters 29'', in welchem der Winkel ϕ von einem Bereich nahe des Eintrittsquerschnittes zu einem Bereich nahe des Austrittsquerschnittes hin abnimmt. Es ist auch vorstellbar, daß der Winkel von dem Bereich nahe des Eintrittsquerschnitt zum Bereich nahe des Austrittsquerschnittes hin zunimmt. Bezugszeichen 43 und 45 bezeichnen wieder ähnlich Figur 9 Wellenberge und Wellentäler in Draufsicht.

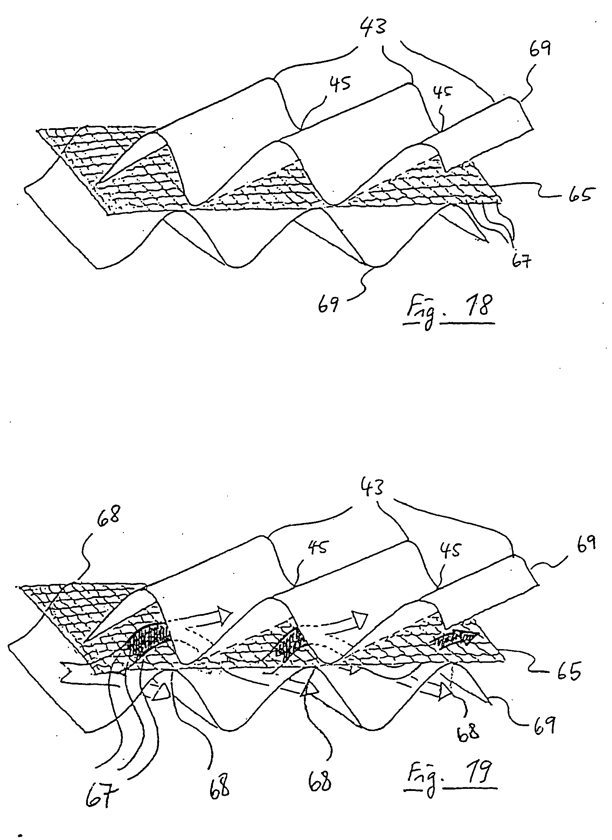

Figur 17 stellt einen in einem Gehäuse 9 angeordneten Partikelfilter 29''' im Längsschnitt dar, wobei der Partikelfilter 29''' aus drei Schichtblöcken 62, 64 und 66 zusammengefügt ist, welche jeweils unterschiedliche Lagenhöhen der Materialschichten 23 aufweisen. Es können auch nur zwei Schichtblöcke oder auch mehr als drei Schichtblöcke hintereinander zusammengefügt werden. Es sind auch hintereinandergefügte Schichtblöcke vorstellbar, wobei jeder Schichtblock Wellenlängen oder/und Amplituden aufweist, welche von denen eines anderen Schichtblockes verschieden sind.

Wie in der Einleitung bereits beschrieben worden ist, haben die abschnittsweisen bzw. gestuften Anordnungen in Kombination mit einer bestimmten Wahl der Geometrieparameter den Vorteil, daß sich die Partikelabscheidung an die Partikelkonzentration im Abgas anpassen läßt.

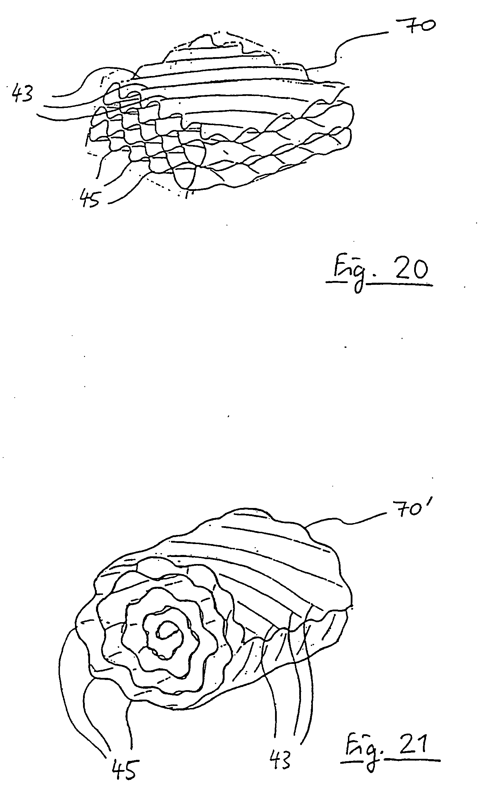

Figuren 18 und 19 zeigen jeweils eine weitere Ausführungsform der Erfindung.

Dabei ist zwischen aufeinander zuweisenden Oberflächenbereichen unmittelbar benachbarter Materialschichten 69 mit Wellenbergen 43 und Wellentälern 45 jeweils ein katalytisch beschichtetes Gitter 65 als eine Zwischenschicht mit einer Dicke von etwa 0,5 mm angeordnet, welche eine Vielzahl von Durchtrittsöffnungen 67 aufweist.

Die Funktion der Zwischenschicht ist folgende: bei jedem Durchtritt des Abgases durch diese Zwischenschicht findet eine zusätzliche Neubildung von NO₂ statt. Dabei weisen die Durchtrittsöffnungen 67 eine lichte Weite von etwa 0,4 mm auf, womit die Durchtrittöffnungen groß genug sind, so daß sie nicht verblocken können. Die zusätzlich neugebildeten NO₂ Moleküle tragen nun zusätzlich zur Oxidation von Rußpartikeln auf den Materialschichten bei.

Wenn also bei extremer Rußbeladung die Oberflächen der Materialschichten mit einer zu dicken Rußschicht bedeckt sind, so daß das Abgas nur unzureichend mit der katalytischen Substanz in Kontakt kommen kann, sorgt die Zwischenschicht trotzdem für eine ausreichende NO₂-Neubildung. Somit ist die Funktion des Partikelfilters in jedem Lastzustand aufrechterhalten.

Figur 19 stellt dar, wie der Strömungsverlauf bei Durchströmung der Struktur nach Figur 18 mit einem Abgas verläuft. Dabei tritt das Abgas bei seinem Strömungsverlauf zwischen den Materialschichten 69 mit Wellenbergen 43 und Wellentälern 45 durch die Zwischenschicht 65 durch die Vielzahl von Durchtrittsöffnungen 67 hindurch.

Die aufeinander zuweisenden konvexen Oberflächenbereiche der Materialschichten 69 sind mit der Zwischenschicht 65 an Stellen 68 fest verbunden. Die Materialschichten 69 können aber auch nur an der Zwischenschicht 65 anliegen, ohne mit dieser fest verbunden zu sein.

Wekstoff der Zwischenschicht 65 ist Metall, wobei aber auch keramisches Material denkbar ist. Strukturell kann die Zwischenschicht 65 auch als Vlies, Gewebe, Netz, Lochplatte oder ähnlichem aufgebaut sein.

Die Zwischenschicht 65 ist mit einem Edelmetall beschichtet. Es ist aber auch jedes andere Katalysatormaterial als Beschichtung bzw. als Material für die Zwischenschicht 65 denkbar. Analog zu den oben beschriebenen Vorgängen der NO₂-Neubildung durch eine katalytische Schicht auf dem porösen Werkstoff der Materialschichten wird auch hier bei jedem Durchtritt des Abgases durch die Zwischenschicht 65 NO₂ neu gebildet, welches zur vermehrten Rußoxidation im Partikelfilter beiträgt. Im Falle einer sehr hohen Filterbeladung wird ein großer Teil der Strömung nicht durch die filternden Materialschichten hindurchtreten, sondern diese überströmen. Bei extremer Beladung kann zusätzlich die Oberfläche der filternden Materialschichten mit einer Rußschicht bedeckt sein. Hierbei kann die Strömung nur unzureichend mit dem Katalysatormaterial in Kontakt kommen. In diesem Falle bietet das Katalysatormaterial auf der zusätzlichen Zwischenschicht den Vorteil, daß eine katalytische NO₂-Neubildung auch außerhalb der filternden Materialschichten erfolgt. Da die Strömung mehrfach durch die Zwischenschicht hindurchtreten muß, und somit mehrfach mit dem Katalysatormaterial in Kontakt gelangt, kann eine effiziente Mehrfachnutzung der NO₂-Neubildung erfolgen.

In der in Figuren 18 und 19 dargestellten Ausführungsform tragen sowohl die Zwischenschicht 65 als auch die Materialschichten 69 eine katalytische Beschichtung. Es ist aber auch denkbar, daß die Zwischenschicht als alleiniger Katalysatorträger eingesetzt wird, wobei die Materialschichten keine katalytische Beschichtung tragen.

Figuren 19 und 20 zeigen verschiedene Möglichkeiten der Herstellung der Abgasreinigungsanordnung:

Figur 20 zeigt ein Beispiel, in welchem eine einzelne Materialschicht 70 mit Wellenbergen 43 und Wellentälern 45 durch Hin- und Herfalten gebildet wird, im Gegensatz zu allen bisherigen Ausführungsformen, in denen einzelne Materialschichten übereinander geschichtet wurden.

Figur 21 zeigt ein Beispiel, in welchem eine Materialschicht 70' mit Wellenbergen 43 und Wellentälern 45 aufgewickelt ist, wobei sich sowohl kreisrunde als auch ovale oder ähnliche Formen ergeben können.

## Patentansprüche

1. Abgasreinigungsanordnung zur Reinigung eines Abgases einer Verbrennungskraftmaschine, umfassend:
eine Vielzahl von Materialschichten (23; 47; 47'; 47''; 69) mit jeweils zwei Schichtoberflächen (27), welche eine Vielzahl von nebeneinander angeordneten konkaven und konvexen Oberflächenbereichen (25) aufweisen, wobei die Materialschichten (23; 47; 47'; 47''; 69) derart übereinander angeordnet sind, daß zwischen aufeinander zuweisenden Bereichen der Schichtoberflächen (27) Strömungskanäle (24) für das zu reinigende Abgas gebildet sind, wobei die Materialschichten (23; 47; 47'; 47''; 69) aus einem porösen Werkstoff gebildet sind,
**dadurch gekennzeichnet, daß** der poröse Werkstoff aus einem Schaum gefertigt ist.

2. Abgasreinigungsanordnung nach Anspruch 1, wobei die Strömungskanäle (24) für das zu reinigende Abgas frei durchgängig sind.

3. Abgasreinigungsanordnung nach Anspruch 1 oder 2, wobei konkaven Oberflächenbereichen einer ersten der Schichten jeweils konvexe Oberflächenbereiche einer der ersten Schicht unmittelbar benachbarten zweiten Schicht gegenüberliegen.

4. Abgasreinigungsanordnung nach Anspruch 3, wobei ein mittlerer Abstand zwischen der ersten und der zweiten Schicht kleiner ist als eine Auslenkung der konkaven bzw. konvexen Oberflächenbereiche (25) aus deren Schichtebenen.

5. Abgasreinigungsanordnung nach Anspruch 3 oder 4, wobei ein mittlerer Abstand zwischen der ersten und der zweiten Schicht einen Wert in einem Bereich von 0,5 mm bis 5,0 mm, insbesondere 1,0 mm bis 3,0 mm, aufweist.

6. Abgasreinigungsanordnung nach einem der Ansprüche 1 bis 5, wobei die konkaven und konvexen Oberflächenbereiche (25) in einer Schichtrichtung abwechselnd nebeneinander angeordnet sind.

7. Abgasreinigungsanordnung nach Anspruch 6, wobei die konkaven und konvexen Oberflächenbereiche (25) in einer Schichtrichtung oder in zwei quer zueinander orientierten Schichtrichtungen periodisch angeordnet sind.

8. Abgasreinigungsanordnung nach einem der Ansprüche 1 bis 6, wobei durch die konkaven und konvexen Oberflächenbereiche (25) zusammenhängende Wellenberge (43; 43'; 43'') und Wellentäler (45; 45'; 45'') gebildet sind.

9. Abgasreinigungsanordnung nach Anspruch 8, wobei die Wellenberge (43; 43'; 43'') und Wellentäler (45; 45'; 45'') sich in einer Schichtebene im wesentlichen geradlinig erstrecken.

10. Abgasreinigungsanordnung nach Anspruch 8, wobei die Wellenberge (43; 43'; 43'') und Wellentäler (45; 45'; 45'') sich in einer Schichtebene gekrümmt erstrecken.

11. Abgasreinigungsanordnung nach Anspruch 9 oder 10, wobei Erstreckungsrichtungen der Wellenberge (43; 43'; 43'') und Wellentäler (45; 45'; 45'') einer ersten Schicht unter einem Winkel zu Erstreckungsrichtungen der Wellenberge (43; 43'; 43'') und Wellentäler (45; 45'; 45'') einer der ersten Schicht unmittelbar benachbarten zweiten Schicht orientiert sind.

12. Abgasreinigungsanordnung nach einem der Ansprüche 8 bis 11, wobei die Materialschichten (23; 47; 47'; 47''; 69) zu einem Schichtblock zusammengefügt sind, welcher einen Eintrittsquerschnitt (49; 49'; 49'') und einen Austrittsquerschnitt (51; 51'; 51'') für das zu reinigende Abgas aufweist, und Erstreckungsrichtungen der Wellenberge (43; 43'; 43'') und Wellentäler (45; 45'; 45'') sich unter einem Winkel zu einer Strömungsverbindungslinie (A; A'; A'') zwischen dem Eintrittsquerschnitt (49; 49'; 49'') und dem Austrittsquerschnitt (51; 51'; 51'') erstrecken.

13. Abgasreinigungsanordnung nach Anspruch 12, wobei der Winkel in einem Bereich von 10° bis 50° liegt.

14. Abgasreinigungsanordnung nach Anspruch 12 oder 13, wobei der Winkel von einem Bereich nahe dem Eintrittsquerschnitt (49; 49'; 49'') zu einem Bereich nahe dem Austrittsquerschnitt (51; 51'; 51'') hin zunimmt oder abnimmt.

15. Abgasreinigungsanordnung nach einem der Ansprüche 1 bis 14, wobei eine Auslenkung der konkaven bzw. konvexen Oberflächenbereiche (25) aus deren Schichtebenen größer als 1 mm ist.

16. Abgasreinigungsanordnung nach einem der Ansprüche 1 bis 15, wobei eine Auslenkung der konkaven bzw. konvexen Oberflächenbereiche (25) aus deren Schichtebenen kleiner als 7 mm, insbesondere kleiner als 5 mm und weiter bevorzugt kleiner als 3 mm ist.

17. Abgasreinigungsanordnung nach einem der Ansprüche 1 bis 16, wobei ein Abstand in Schichtrichtung zwischen einander benachbarten konvexen Bereichen größer als 2 mm, insbesondere größer als 3 mm ist.

18. Abgasreinigungsanordnung nach einem der Ansprüche 1 bis 17, wobei ein Abstand in Schichtrichtung zwischen einander benachbarten konvexen Bereichen kleiner als 7 mm, insbesondere kleiner als 5 mm ist.

19. Abgasreinigungsanordnung nach einem der Ansprüche 1 bis 18, wobei eine Dicke der Materialschichten (23; 47; 47'; 47''; 69) größer als 0,1 mm, insbesondere größer als 0,3 mm ist.

20. Abgasreinigungsanordnung nach einem der Ansprüche 1 bis 19, wobei eine Dicke der Schichten kleiner als 2,0 mm, insbesondere kleiner als 1,2 mm ist.

21. Abgasreinigungsanordnung nach einem der Ansprüche 1 bis 20, wobei der poröse Werkstoff ein Katalysatormaterial, insbesondere aus wenigstens einem Edelmetall oder/und wenigstens einem Metalloxid oder/und wenigstens einem Mischoxid, umfaßt.

22. Abgasreinigungsanordnung nach Anspruch 21, wobei das Katalysatormaterial auf innere und äußere Oberflächen des porösen Werkstoffs aufgebracht ist.

23. Abgasreinigungsanordnung nach einem der Ansprüche 1 bis 22, wobei der poröse Werkstoff ein, insbesondere auf innere und äußere Oberflächen des porösen Werkstoffs aufgebrachtes, Sauerstoff-Speichermaterial umfaßt, welches insbesondere Cer oder/und ein Ceroxid umfaßt .

24. Abgasreinigungsanordnung nach einem der Ansprüche 1 bis 23, wobei aufeinander zuweisende konvexe Oberflächenbereiche (25) unmittelbar benachbarter Materialschichten (23; 47; 47'; 47"; 69) aneinander anliegen.

25. Abgasreinigungsanordnung nach Anspruch 24, wobei die aneinander anliegenden konvexen Oberflächenbereiche (25) fest miteinander verbunden sind.

26. Abgasreinigungsanordnung nach einem der Ansprüche 1 bis 23, wobei zwischen aufeinander zuweisenden konvexen Oberflächenbereichen (25) unmittelbar benachbarter Materialschichten (23; 47; 47'; 47"; 69) eine Zwischenschicht (65) angeordnet ist, welche eine Vielzahl von Durchtrittsöffnungen (67) aufweist.

27. Abgasreinigungsanordnung nach Anspruch 26, wobei die aufeinander zuweisenden konvexen Oberflächenbereichen (25) an der Zwischenschicht (65) anliegen und insbesondere mit dieser fest verbunden sind.

28. Abgasreinigungsanordnung nach Anspruch 26 oder 27, wobei die Zwischenschicht (65) ein Gitter oder/und ein Netz oder/und eine Lochplatte umfaßt.

29. Abgasreinigungsanordnung nach einem der Ansprüche 26 bis 28, wobei die Zwischenschicht (65) einen Dicke in einem Bereich von 0,01 mm bis 1,0 mm, insbesondere von 0,02 mm bis 0,8 mm aufweist.

30. Abgasreinigungsanordnung nach einem der Ansprüche 26 bis 29, wobei die Durchtrittsöffnungen (67) eine lichte Weite von mehr als 0,3 mm, insbesondere mehr als 0, 5 mm, aufweisen.

31. Abgasreinigungsanordnung nach einem der Ansprüche 26 bis 30, wobei die Zwischenschicht (65) Katalysatormaterial oder/und ein Sauerstoff-Speichermaterial umfaßt.

32. Abgasreinigungsanordnung nach einem der Ansprüche 1 bis 31, wobei die Materialschichten (23; 47; 47'; 47''; 69) zu einem Schichtblock zusammengefügt sind, welcher einen Eintrittsquerschnitt (49; 49'; 49") und einen Austrittsquerschnitt (51; 51'; 51") für das zu reinigende Abgas aufweist, und wobei mehrere solcher Schichtblöcke (61; 62; 63; 64; 66) mit ihren Aus- und Eintrittsquerschnitten (49, 51) aneinandergefügt sind.

33. Abgasreinigungsanordnung nach einem der Ansprüche 1 bis 31, wobei einander unmittelbar benachbarte Materialschichten (23; 47; 47'; 47"; 69) durch eine zusammenhängende Materialschicht (23; 47; 47'; 47''; 69) gebildet sind.

34. Abgasreinigungsanordnung nach Anspruch 33, wobei die einander unmittelbar benachbarten Materialschichten (23; 47; 47'; 47''; 69) durch Hin- und Her-Falten der zusammenhängenden Materialschicht (23; 47; 47' ; 47' ' ; 69) gebildet sind.

35. Abgasreinigungsanordnung nach Anspruch 33, wobei die einander unmittelbar benachbarten Materialschichten (23; 47; 47' ; 47"; 69) durch Aufwickeln der zusammenhängenden Materialschicht (23; 47; 47'; 47''; 69) gebildet sind.

## Claims

1. An exhaust purification device for the purification of an exhaust gas of a combustion engine, comprising:
a large number of material layers (23; 47; 47'; 47"; 69) with in each case two layer surfaces (27), which comprise a large number of concave and convex surface regions (25) disposed next to one another, wherein the material layers (23; 47; 47'; 47" ; 69) are disposed one above the other in such a way that flow channels (24) for the exhaust gas to be purified are formed between facing regions of the layer surfaces (27), the material layers (23; 47; 47'; 47"; 69) being formed from a porous material,
**characterised in that** the porous material is produced from a foam.

2. The exhaust purification device according to claim 1, wherein the flow channels (24) are freely passable for the exhaust gas to be purified.

3. The exhaust purification device according to claim 1 or 2, wherein convex surface regions of a second layer directly adjacent to the first layer each lie opposite concave surface regions of a first of the layers.

4. The exhaust purification device according to claim 3, wherein a mean distance between the first and the second layer is smaller than an excursion of the concave or convex surface regions (25) from their layer plane, respectively.

5. The exhaust purification device according to claim 3 or 4, wherein a mean distance between the first and the second layer has a value in a range from 0.5 mm to 5.0 mm, in particular 1.0 mm to 3.0 mm.

6. The exhaust purification device according to any one of claims 1 to 5, wherein the concave and convex surface regions (25) are disposed alternately next to one another in a layer direction.

7. The exhaust purification device according to claim 6, wherein the concave and convex surface regions (25) are disposed periodically in one layer direction or in two layer directions orientated at right angles to one another.

8. The exhaust purification device according to any one of claims 1 to 6, wherein interconnected wave crests (43; 43'; 43") and wave troughs (45; 45'; 45") are formed by the concave and convex surface regions (25).

9. The exhaust purification device according to claim 8, wherein the wave crests (43; 43'; 43") and wave troughs (45; 45'; 45") extend essentially straight in a layer plane.

10. The exhaust purification device according to claim 8, wherein the wave crests (43; 43'; 43") and wave troughs (45; 45'; 45") extend in a curved manner in a layer plane.

11. The exhaust purification device according to claim 9 or 10, wherein extension directions of the wave crests (43; 43'; 43") and wave troughs (45; 45'; 45") of a first layer are orientated at an angle to the extension directions of the wave crests (43; 43'; 43") and wave troughs (45; 45'; 45") of a second layer directly adjacent to the first layer.

12. The exhaust purification device according to any one of claims 8 to 11, wherein the material layers (23; 47; 47'; 47"; 69) are joined together to form a layer block, which has an entry cross-section (49; 49'; 49") and an exit cross-section (51; 51'; 51") for the exhaust gas to be purified, and extension directions of the wave crests (43; 43'; 43") and wave troughs (45; 45'; 45") extend at an angle to a flow connection line (A; A'; A") between the entry cross-section (49; 49'; 49") and the exit cross-section (51; 51'; 51").

13. The exhaust purification device according to claim 12, wherein the angle lies in a range from 10° to 50°.

14. The exhaust purification device according to claim 12 or 13, wherein the angle increases or diminishes from a region close to the entry cross-section (49; 49'; 49") to a region close to the exit cross-section (51; 51'; 51").

15. The exhaust purification device according to any one of claims 1 to 14, wherein an excursion of the concave or convex surface regions (25) out of their layer plane, respectively, is greater than 1 mm.

16. The exhaust purification device according to any one of claims 1 to 15, wherein an excursion of the concave or convex surface regions (25) out of their layer plane, respectively, is less than 7 mm, in particular less than 5 mm and more particularly less than 3 mm .

17. The exhaust purification device according to any one of claims 1 to 16, wherein a distance in the layer direction between convex regions adjacent to one another is greater than 2 mm, in particular greater than 3 mm.

18. The exhaust purification device according to any one of claims 1 to 17, wherein a distance in the layer direction between convex regions adjacent to one another is less than 7 mm, in particular less than 5 mm.

19. The exhaust purification device according to any one of claims 1 to 18, wherein a thickness of the material layers (23; 47; 47'; 47"; 69) is greater than 0.1 mm, in particular greater than 0.3 mm.

20. The exhaust purification device according to any one of claims 1 to 19, wherein a thickness of the layers is less than 2.0 mm, in particular less than 1.2 mm.

21. The exhaust purification device according to any one of claims 1 to 20, wherein the porous material comprises a catalyst material, in particular of at least one precious metal and/or at least one metal oxide and/or at least one mixed oxide.

22. The exhaust purification device according to claim 21, wherein the catalyst material is deposited onto inner and outer surfaces of the porous material.

23. The exhaust purification device according to any one of claims 1 to 22, wherein the porous material comprises an oxygen storage material, in particular deposited onto inner and outer surfaces of the porous material, said oxygen storage material comprising in particular cerium and/or a cerium oxide.

24. The exhaust purification device according to any one of claims 1 to 23, wherein facing convex surface regions (25) of directly adjacent material layers (23; 47; 47'; 47"; 69) abut one another.

25. The exhaust purification device according to claim 24, wherein the convex surface regions (25) abutting one another are firmly connected together.

26. The exhaust purification device according to any one of claims 1 to 23, wherein an intermediate layer (65), which comprises a large number of pass-through openings (67), is disposed between facing convex surface regions (25) of directly adjacent material layers (23; 47; 47'; 47"; 69).

27. The exhaust purification device according to claim 26, wherein the facing convex surface regions (25) abut the intermediate layer (65) and in particular are firmly connected to the latter.

28. The exhaust purification device according to claim 26 or 27, wherein the intermediate layer (65) comprises a grid and/or a net and/or a perforated plate.

29. The exhaust purification device according to any one of claims 26 to 28, wherein the intermediate layer (65) has a thickness in a range from 0.01 mm to 1.0 mm, in particular from 0.02 mm to 0.8 mm.

30. The exhaust purification device according to any one of claims 26 to 29, wherein the pass-through openings (67) have an inside width of more than 0.3 mm, in particular more than 0.5 mm.

31. The exhaust purification device according to any one of claims 26 to 30, wherein the intermediate layer (65) comprises catalyst material and/or an oxygen storage material.

32. The exhaust purification device according to any one of claims 1 to 31, wherein the material layers (23; 47; 47'; 47"; 69) are joined together to form a layer block, which has an entry cross-section (49; 49'; 49") and an exit cross-section (51; 51'; 51") for the exhaust gas to be purified, and wherein a plurality of such layer blocks (61; 62; 63; 64; 66) are joined together with their exit and entry cross-sections (49, 51).

33. The exhaust purification device according to any one of claims 1 to 31, wherein material layers (23; 47; 47'; 47"; 69) directly adjacent to one another are formed by a contiguous material layer (23; 47; 47'; 47"; 69).

34. The exhaust purification device according to claim 33, wherein the material layers (23; 47; 47'; 47"; 69) directly adjacent to one another are formed by folding back and forth the contiguous material layer (23; 47; 47'; 47"; 69).

35. The exhaust purification device according to claim 33, wherein the material layers (23; 47; 47'; 47"; 69) directly adjacent to one another are formed by winding up the contiguous material layer (23; 47; 47'; 47"; 69).

## Revendications

1. Dispositif de purification de gaz d'échappement pour la purification des gaz d'échappement d'un moteur à combustion, comprenant :
une pluralité de couches de matériau (23 ; 47 ; 47' ; 47" ; 69) avec chacune deux surfaces de couche (27) qui présentent une pluralité de zones de surface concaves et convexes (25) agencées les unes à côté des autres, lesdites couches de matériau (23 ; 47 ; 47' ; 47" ; 69) étant agencées les unes au-dessus des autres de telle manière que, entre des zones mutuellement face à face des surfaces de couche (27) sont formés des canaux d'écoulement (24) pour les gaz d'échappement à purifier, et les couches de matériau (23 ; 47 ; 47' ; 47" ; 69) sont formées en un matériau poreux,
**caractérisé en ce que** le matériau poreux est réalisé à partir d'une mousse.

2. Dispositif de purification de gaz d'échappement selon la revendication 1, dans lequel les canaux d'écoulement (24) sont librement accessibles pour les gaz d'échappement à purifier.

3. Dispositif de purification de gaz d'échappement selon la revendication 1 ou 2, dans lequel à des zones de surface concaves d'une première desdites couches sont en regard des zones de surface convexes respectives d'une deuxième couche immédiatement voisine de la première couche.

4. Dispositif de purification de gaz d'échappement selon la revendication 3, dans lequel une distance moyenne entre la première et la deuxième couche est inférieure à une déviation des zones de surface concaves ou convexes (25) hors du plan de couche.

5. Dispositif de purification de gaz d'échappement selon la revendication 3 ou 4, dans lequel une distance moyenne entre la première et la deuxième couche présente une valeur dans une plage de 0,5 mm à 5,0 mm, en particulier 1,0 mm et à 3,0 mm.

6. Dispositif de purification de gaz d'échappement selon l'une des revendications 1 à 5, dans lequel les zones de surfaces concaves et convexes (25) sont agencées en alternance les unes à côté des autres dans une direction de la couche.

7. Dispositif de purification de gaz d'échappement selon la revendication 6, dans lequel les zones de surfaces concaves et convexes (25) sont agencées de manière périodique dans une direction de la couche ou dans deux directions orientées perpendiculairement l'une à l'autre dans la couche.

8. Dispositif de purification de gaz d'échappement selon l'une des revendications 1 à 6, dans lequel, au moyen des zones de surfaces concaves et convexes (25) sont formés des sommets d'ondulations (43 ; 43' ; 43") et des creux d'ondulations (45 ; 45' ; 45") attenant les uns aux autres.

9. Dispositif de purification de gaz d'échappement selon la revendication 8, dans lequel les sommets d'ondulations (43 ; 43' ; 43") et les creux d'ondulations (45 ; 45' ; 45") s'étendent essentiellement en ligne droite dans un plan de couche.

10. Dispositif de purification de gaz d'échappement selon la revendication 8, dans lequel les sommets d'ondulations (43 ; 43' ; 43") et les creux d'ondulations (45 ; 45' ; 45") s'étendent de manière incurvée dans un plan de couche.

11. Dispositif de purification de gaz d'échappement selon la revendication 9 ou 10, dans lequel les directions d'extension des sommets d'ondulations (43 ; 43' ; 43") et des creux d'ondulations (45 ; 45' ; 45") d'une première couche sont orientées sous un angle par rapport aux directions d'extension des sommets d'ondulations (43 ; 43' ; 43") et des creux d'ondulations (45 ; 45' ; 45") d'une deuxième couche immédiatement voisine de la première couche.

12. Dispositif de purification de gaz d'échappement selon l'une des revendications 8 à 11, dans lequel les couches de matériau (23 ; 47 ; 47' ; 47" ; 69) sont regroupées en un bloc de couches, lequel présente une section d'entrée (49 ; 49' ; 49") et une section de sortie (51 ; 51' ; 51 ") pour les gaz d'échappement à purifier, et les directions d'extension des sommets d'ondulations (43 ; 43' ; 43") et des creux d'ondulations (45 ; 45'; 45") s'étendent sous un angle par rapport à une ligne de jonction d'écoulement (A ; A' ; A") entre la section d'entrée (49 ; 49' ; 49") et la section de sortie (51; 51'; 51").

13. Dispositif de purification de gaz d'échappement selon la revendication 12, dans lequel l'angle est dans une plage de 10° à 50°.

14. Dispositif de purification de gaz d'échappement selon la revendication 12 ou 13, dans lequel l'angle augmente ou diminue depuis une région proche de la section d'entrée (49 ; 49' ; 49") vers une région proche de la section de sortie (51 ; 5 l' ; 51 ").

15. Dispositif de purification de gaz d'échappement selon l'une des revendications 1 à 14, dans lequel une déviation des zones de surfaces concaves ou convexes (25) hors de leur plan de couche est supérieure à 1 mm.

16. Dispositif de purification de gaz d'échappement selon l'une des revendications 1 à 15, dans lequel une déviation des zones de surfaces concaves ou convexes (25) hors de leur plan de couche est inférieure à 7 mm, en particulier inférieure à 5 mm, et de façon plus préférée inférieure à 3 mm.

17. Dispositif de purification de gaz d'échappement selon l'une des revendications 1 à 16, dans lequel une distance, dans la direction de couche, entre des zones convexes mutuellement voisines est supérieure à 2 mm, en particulier supérieure à 3 mm.

18. Dispositif de purification de gaz d'échappement selon l'une des revendications 1 à 17, dans lequel une distance, dans la direction de couche, entre des zones convexes mutuellement voisines est inférieure à 7 mm, en particulier inférieure à 5 mm.

19. Dispositif de purification de gaz d'échappement selon l'une des revendications 1 à 18, dans lequel une épaisseur des couches de matériau (23 ; 47 ; 47' ; 47" ; 69) est supérieure à 0,1 mm, en particulier supérieure à 0,3 mm.

20. Dispositif de purification de gaz d'échappement selon l'une des revendications 1 à 19, dans lequel une épaisseur des couches est inférieure à 2,0 mm, en particulier inférieure à 1,2 mm.

21. Dispositif de purification de gaz d'échappement selon l'une des revendications 1 à 20, dans lequel le matériau poreux est un matériau de catalyseur en particulier en au moins un métal noble et/ou comprend au moins un oxyde métallique et/ou au moins un oxyde mixte.

22. Dispositif de purification de gaz d'échappement selon la revendication 21, dans lequel le matériau de catalyseur est appliqué sur les surfaces intérieures et extérieures du matériau poreux.

23. Dispositif de purification de gaz d'échappement selon l'une des revendications 1 à 22, dans lequel le matériau poreux comprend un matériau accumulateur d'oxygène, appliqué en particulier sur les surfaces intérieures et extérieures du matériau poreux, qui comprend en particulier du Cer et/ou un Ceroxyde.

24. Dispositif de purification de gaz d'échappement selon l'une des revendications 1 à 23, dans lequel des zones de surfaces convexes (25) tournées les unes vers les autres et appartenant à des couches de matériau (23 ; 47 ; 47' ; 47" ; 69) immédiatement voisines sont appliquées les unes contre les autres.

25. Dispositif de purification de gaz d'échappement selon la revendication 24, dans lequel les zones de surfaces convexes (25) appliquées les unes contre les autres sont reliées fixement les unes aux autres.

26. Dispositif de purification de gaz d'échappement selon l'une des revendications 1 à 23, dans lequel, entre des zones de surfaces convexes (25) tournées les unes vers les autres et appartenant à des couches de matériau (23 ; 47 ; 47' ; 47" ; 69) immédiatement voisines, est agencée une couche intermédiaire (65) qui présente une pluralité d'ouvertures traversantes (67).

27. Dispositif de purification de gaz d'échappement selon la revendication 26, dans lequel les zones de surfaces convexes (25) tournées les unes vers les autres sont appliquées contre la couche intermédiaire (65) et sont en particulier fixement reliées à celle-ci.

28. Dispositif de purification de gaz d'échappement selon la revendication 26 ou 27, dans lequel la couche intermédiaire (65) comprend un grillage et/ou un filet et/ou une plaque à trous.

29. Dispositif de purification de gaz d'échappement selon l'une des revendications 26 à 28, dans lequel la couche intermédiaire (65) présente une épaisseur dans une plage de 0,01 mm à 1,0 mm, en particulier de 0,02 mm à 0,8 mm.

30. Dispositif de purification de gaz d'échappement selon l'une des revendications 26 à 29, dans lequel les ouvertures traversantes (67) présentent une largeur libre de plus de 0,3 mm, en particulier de plus de 0,5 mm.

31. Dispositif de purification de gaz d'échappement selon l'une des revendications 26 à 30, dans lequel la couche intermédiaire (65) comprend un matériau catalyseur et/ou un matériau accumulateur d'oxygène.

32. Dispositif de purification de gaz d'échappement selon l'une des revendications 1 à 31, dans lequel les couches de matériau (23 ; 47 ; 47' ; 47" ; 69) sont regroupées en un bloc de couches qui présente une section d'entrée (49 ; 49' ; 49") et une section de sortie (51 ; 51' ; 51") pour les gaz d'échappement à purifier, et dans lequel plusieurs de ces blocs de couche (61 ; 62 ; 63 ; 64 ; 66) sont assemblés les uns contre les autres avec leurs sections de sortie et leurs sections d'entrée (49, 51).

33. Dispositif de purification de gaz d'échappement selon l'une des revendications 1 à 31, dans lequel des couches de matériau (23 ; 47 ; 47' ; 47" ; 69) immédiatement voisines sont formées par une couche de matériau (23 ; 47 ; 47' ; 47" ; 69) cohérente.

34. Dispositif de purification de gaz d'échappement selon la revendication 33, dans lequel les couches de matériaux (23 ; 47 ; 47' ; 47" ; 69) immédiatement voisines sont formées par pliage en accordéon de la couche de matériau (23 ; 47 ; 47' ; 47" ; 69) cohérente.

35. Dispositif de purification de gaz d'échappement selon la revendication 33, dans lequel les couches de matériau (23 ; 47 ; 47' ; 47" ; 69) immédiatement voisines sont formées par enroulement de la couche de matériau (23 ; 47 ; 47' ; 47" ; 69) cohérente.
